# EUROPÄISCHE PATENTSCHRIFT

(11) **EP 1 521 903 B1**
(45) Veröffentlichungstag und Bekanntmachung des Hinweises auf die Patenterteilung: **29.11.2006**
(21) Anmeldenummer: 03763828.5
(22) Anmeldetag: 14.07.2003
(51) Int. Cl.: F01N 11/00

(54) **VERFAHREN UND VORRICHTUNG ZUM KÜNSTLICHEN ALTERN EINER KATALYSATOREINRICHTUNG**
METHOD AND DEVICE FOR ARTIFICIALLY AGEING A CATALYTIC CONVERTER
PROCEDE ET DISPOSITIF POUR LE VIELLISSEMENT ARTIFICIEL D'UN SYSTEME CATALYTIQUE

(30) Priorität: 16.07.2002 DE 10232120
(43) Veröffentlichungstag der Anmeldung: 13.04.2005
(73) Patentinhaber: FEV Motorentechnik GmbH, 52078 Aachen (DE)
(72) Erfinder: WEINOWSKI, Rolf, 52223 Stolberg (DE); WERNER, Sascha, 52134 Herzogerath (DE); SCHERNUS, Christof, 52385 Nideggen (DE)
(74) Vertreter: Neumann, Ernst Dieter
(86) Internationale Anmeldenummer: PCT/EP2003/007570
(87) Internationale Veröffentlichungsnummer: WO 2004/007922

(56) Entgegenhaltungen:
- EP-A- 1 114 921
- WO-A-03/014620
- GB-A- 2 356 826
- US-A- 5 396 794
- US-A- 6 151 888
- US-A1- 2001 054 281

## Beschreibung

Die Erfindung betrifft ein Verfahren zum künstlichen Altern einer Katalysatoreinrichtung nach dem Oberbegriff des Anspruchs 1 sowie eine zur Durchführung des Verfahrens geeignete Vorrichtung.

Der US-Staat Kalifornien hat sich in der Vergangenheit einen Namen durch frühe und strenge Emissionsgesetze für Benzin-Fahrzeuge gemacht. Diese Gesetze machen es notwendig, Abgasnachbehandlungssysteme zu entwickeln, die eine Haltbarkeit von mehr als 161.000 km (100.000 Meilen)aufweisen. In der europäischen Union schreibt der Gesetzgeber mit der Abgasstufe Euro 3 eine Haltbarkeit von 80.000 km und mit Fahrzeugen ab dem Modelljahr 2005 mit Einführung der Abgasstufe Euro 4 eine Haltbarkeit von 100.000 km vor.

Um die verkehrsbedingte Luftverschmutzung zu reduzieren führte die "California Air Resources Board" (CARB) 1988 für alle Benzin-Fahrzeuge in Kalifornien mit der OBD (On Board Diagnose) verschärfte Emissionsgrenzwerte ein. Zusätzlich zu dieser Verschärfung mußten alle abgasrelevanten Komponenten durch die zur Verfügung stehenden elektronischen Steuergeräte einer kontinuierlichen Überwachung unterzogen werden. Die Europäische Union führte zum Modelljahr 2001 für alle Benzin-Fahrzeuge eine ähnliche Gesetzgebung ein. Dabei unterscheiden sich die Abgasstufen zwischen den Grenzwerten für die Emissionen und der On Board Diagnose. Die Grenzwerte der OBD sind von der CARB mit einem festen Verschlechterungsfaktor versehen, und sollen das Verhalten eines gealterten Bauteils widerspiegeln. So muß bei Überschreiten dieser Abgasgrenze dem Fahrer durch ein optisches Signal der fehlerhafte Betrieb eines emissionsrelevanten Bauteils verdeutlicht werden.

Diese Überwachung aller On Board Diagnosen muß bei einer Homologation (Typisierung) vor dem Gesetzgeber mit entsprechend gealterten Bauteilen zertifiziert werden, um die Fehlererkennung zu demonstrieren. Des weiteren muß ein Nachweis darüber geführt werden, daß die Emissionsrichtlinien, wie vom Gesetzgeber vorgeschrieben, entsprechend der vorgegebenen Dauerhaltbarkeit erfüllt werden.

Neben der Typzertifizierung überwacht der Gesetzgeber im Feld, speziell in Kalifornien und den USA, die Automobilhersteller, ob die vorgeschriebenen Gesetze eingehalten, und ob man die Gesetzesvorschriften erweitern kann. So werden mit der ab Modelljahr 2004 geltenden LEVII Gesetzgebung hauptsächlich die NOx Emissionen schärfer reglementiert. Dies gilt vor allem für die OBD, da zur Zeit lediglich die Kohlenwasserstoff(HC)Emissionen reglementiert sind, was dazu führt, daß der Automobilhersteller auch lediglich eine Verschlechterung der Kohlenwasserstoffkonvertierung im Abgas diagnosetechnisch überwacht. Da man über die Erfahrung und aus Feldversuchen der letzten Jahre festgestellt hat, daß die Stickoxidemissionen nicht vergleichbar zu den Kohlenwasserstoffemissionen altern, muß ab Modelljahr 2004 neben den Kohlenwasserstoffemissionen ein Überschreiten der NOx-Emissionen ebenfalls überwacht werden.

So gilt für die Emissionen des zu überwachenden Katalysators mit der Einführung der LEVII - Gesetzgebung in den USA, daß weder die methanfreien Kohlenwasserstoffemissionen noch die Stickoxidemissionen das 1,75-Fache des zu applizierenden Emissionsgrenzwertes überschreiten dürfen, und daß die Konvertierungsrate des gealterten Katalysators sowohl für die methanfreien Kohlenwasserstoffemissionen als auch für die Stickoxidemissionen 50% nicht unterschreiten darf.

Des weiteren wird mit der LEVII Gesetzgebung das Altern von Gesamtabgasanlagen für diejenigen Hersteller gefordert, die keine Zylinderabschaltung bei erkannten Aussetzern oberhalb der katalysatorschädigenden Aussetzer vornehmen.

Die ständig wachsenden Anforderungen des Gesetzgebers erfordern von den Automobilherstellern, mehr Forschung in die Alterungsprozesse von Bauteilen, welche abgasrelevant sind, zu investieren.

Die gealterten Bauteile sind im Verlauf der Applikation eines jeden Fahrzeugs ein wichtiger Bestandteil zur Untersuchung der Abgasrelevanz. So muß zum einen sicher gestellt werden, welchen Einfluß ein gealtertes Bauteil auf die Emissionen hat, und zum anderen, inwieweit sich das Verhalten zu einem neuen Bauteil verändert hat. Diese Informationen müssen im Laufe der Applikation entsprechend in der Software verarbeitet werden.

Von extrem großer Bedeutung ist hierbei das Alterungsverhalten von katalytischen Abgassystemen und das Simulieren von Alterungszuständen.

Zur Zeit existieren grundsätzlich drei verschiedene künstliche Alterungsverfahren für Kfz-Katalysatoren.

So ist eine Alternative das Stimulieren von Aussetzern im Fahrzeug. Das unverbrannte Luft- und Kraftstoffgemisch wird im Katalysator nachverbrannt und erzeugt relativ hohe Katalysatortemperaturen. Dieses Verfahren der Alterung hat sich jedoch in der Vergangenheit als nicht reproduzierbar erwiesen, da kein einheitlicher Zyklus zur Alterung für die unterschiedlichen Katalysatorsysteme ermittelt werden konnte. Außerdem kann die Temperatur im Katalysator während eines konstanten Betriebspunktes nur schwer auf einem Niveau gehalten werden. Bedingt durch die unkontrollierte Verbrennung des unverbrannten Kraftstoffs im Katalysator und die damit verbundenen unkontrollierbaren Temperaturspitzen kommt es weiterhin zu einer Bauteilschwächung bis hin zur optischen Zerstörung des Katalysators. Des weiteren kann dieses Alterungsverfahren relativ zeit- und kostenintensiv sein, da in der Regel mehrere Katalysatoren für verschiedene Versuche benötigt werden, sowie aufgrund des kostenaufwendigen Einsatzes von Motorenprüfständen sowie deren Verfügbarkeit.

Ein weiteres Verfahren zur Katalysatoralterung ist die Ofen- bzw. die Vakuum-Ofen-Alterung. Bei diesem Verfahren wird lediglich der Monolith des Katalysators bei einer Temperatur von 1000 bis 1350°C im Ofen gealtert. Nach der Alterung muss der Monolith an den entsprechenden Zulieferer weitergeleitet werden, um in das Katalysatorgehäuse verbaut zu werden. Das entsprechend gealterte Bauteil muß nun in das Fahrzeug montiert und für einige hundert Kilometer zur Stabilisierung unter Berücksichtigung der Emissionen eingefahren werden. Ist das Emissionsziel nach einem Abgastest nicht erreicht, muß der Alterungsvorgang wiederholt werden. In der Regel sind mehrere iterative Alterungsschritte notwendig, um die gewünschte Verschlechterung der Konvertierungsrate zu erhalten. Dieses Verfahren kann zu erheblichen Zeitverzögerungen im OBD-Applikationsprozess führen. Der Aufwand sowohl bei den Aus-, sowie Einbauarbeiten des Katalysators sowie das nach jedem Alterungsschritt zu fahrende Stabilisierungsprogramm erfordert neben der Zeitintensivität ebenfalls kostspielige Ressourcen. Des weiteren kann mit diesem Alterungsverfahren nicht die gesamte Abgasanlage gealtert werden, da aufgrund der unterschiedlichen Positionen der Katalysatoren im Fahrzeug, eine unterschiedliche Belastung des Bauteils mit diesem Verfahren nicht simuliert werden kann.

Zusätzlich zu den oben genannten Verfahren wird das künstliche Altern von Katalysatoren auf dem Motorenprüfstand angewandt. In einem speziellen Dauerlaufzyklus wird der Katalysator extremen Temperaturspitzen und Betriebszuständen unterzogen, um das Altern zu beschleunigen. Zusätzlich kann die Alterung durch Lambdareglereingriffe nach "fett" bzw. "mager" beschleunigt werden. Dieses Verfahren ist, bedingt durch den Einsatz eines Motorenprüfstandes, relativ kostenintensiv, und nicht auf unterschiedliche Abgasanlagen übertragbar. Hierbei kann auch eine Kombination aus fettem Abgasgemisch mit zusätzlicher Sauerstoffanreicherung des Abgases zur effektiveren Nachverbrennung eingesetzt werden. Es hat sich jedoch gezeigt, daß es, aufgrund der auftretenden Temperaturspitzen, im Katalysator zur teilweisen Verschmelzung bis hin zur kompletten Erodierung des Monolithen kommen kann.

Alle aufgeführten Verfahren sind somit iterative Alterungsverfahren, die entweder einen relativ großen Aufwand an Ressourcen wie zum Beispiel Motorenprüfstände benötigen, bzw. die eine unbekannte Anzahl an Versuchsträgem voraussetzen. Des weiteren liegt die Problematik darin, daß heutige Katalysatoren auf die Wünsche der Automobilhersteller zugeschnitten werden, wie zum Beispiel unterschiedliche Zelldichte bzw. unterschiedliche Anteile an Edelmetallen, und somit das Alterungsverhalten untereinander differiert. Daher ist man im Moment nicht in der Lage einen einheitlichen Alterungszyklus einzusetzen, der das Abgas auf ein entsprechend vergleichbares Niveau verschlechtert.

Aus US 2001/0054281 A1 ist ein Verfahren zum künstlichen Altern einer Katalysatoreinrichtung bekannt, bei dem heißes Alterungsgas mit C-, HC- und/oder NOx-haltigen Bestandteilen durch eine zum Einsatz an einem Katalysatorprüfstand dienende Katalysatoreinrichtung, geeignet für die Umsetzung von Abgasen mit C-, HC- und/oder NOx-haltigen Bestandteilen, hindurch geführt wird. Die unmittelbare Bereitstellung des gesamten Alterungsgasstroms durch einen Brenner erfordert einen sehr großen Brennstoffeinsatz mit entsprechendem CO₂-Ausstoß, wobei außerdem zur Erzeugung motortypischer Abgastemperaturen am Eintritt der Katalysatoreinrichtung Abgaskühler zwischen zu schalten sind.

Auch bei dem aus WO 03/014620 A1 bekannten Verfahren zum künstlichen Altern einer Katalysatoreinrichtung wird das Alterungsgas mittels Wasserkühlung gekühlt.

Aus GB 2 356 826 A ist ein Verfahren zum künstlichen Altern einer Katalysatoreinrichtung bekannt, bei der von einem Verbrennungsmotor erzeugte Abgase mit Sekundärluft gemischt und überschüssiger Brennstoff mit der Sekundärluft verbrannt wird, um dann der luftgekühlten Katalysatoreinrichtung zugeführt zu werden.

Aufgabe der Erfindung ist es daher, ein Verfahren zum künstlichen Altern einer Katalysatoreinrichtung nach dem Oberbegriff des Anspruchs 1 und eine hierzu geeignete Vorrichtung zu schaffen, die es ermöglichen, das künstliche Altern zu standardisieren.

Diese Aufgabe wird entsprechend der Merkmalskombination des Anspruchs 1 bzw. 27 gelöst.

Hiernach wird ein künstliches Altern vorgenommen, indem heißes Alterungsgas mit C-, HC- und/oder NOx-haltigen Bestandteilen durch eine zum Einsatz an einem Katalysatorprüfstand dienende Katalysatoreinrichtung, geeignet für die Umsetzung von Abgasen mit C-, HC- und/oder NOx-haltigen Bestandteilen, hindurch geführt wird, wobei das heiße Alterungsgas durch eine zum Einsatz an einem Katalysatorprüfstand dienende Katalysatoreinrichtung, geeignet für die Umsetzung von Abgasen mit C-, HC- und/oder NOx-haltigen Bestandteilen, hindurch geführt sowie aus der Katalysatoreinrichtung austretendes Gas teilweise dem der Katalysatoreinrichtung zuzuführenden Alterungsgas zur Rezirkulation beigemischt wird.

Das Alterungsgas wird zweckmäßigerweise durch Verbrennung eines C-haltigen Kraftstoffs mit Verbrennungsluft, vorzugsweise durch Verbrennen in einem Brenner oder einer Gasturbine, erzeugt. Die Zusammensetzung des Alterungsgases kann ferner durch Zumischen von zusätzlichen Komponenten, insbesondere C-, HC- und/oder NOx-haltigen Komponenten, verändert werden.

Jedoch kann das Alterungsgas auch synthetisch, d.h. durch Entnahme aus Gasflaschen und Erhitzen oder durch Verbrennung von Wasserstoff und Zumischen von zusätzlichen Komponenten, insbesondere C-, HC- und/oder NOx-haltigen Komponenten, erzeugt werden.

Zweckmäßigerweise wird ein Alterungsgas mit einer Temperatur >250°C, vorzugsweise >700°C und insbesondere von etwa 1000°C bis etwa 1250°C verwendet.

Wenn das Alterungsgas als heißes Abgas eines Verbrennungsvorgangs eines C-haltigen, flüssigen oder gasförmigen Kraftstoffs erzeugt wird, wird vorzugweise mit einer Lambda-Einstellung > 1, vorzugsweise > 1, 5 gearbeitet. Die Temperatur des der Katalysatoreinrichtung zuzuführenden Alterungsgases kann unabhängig von der Einstellung von Lambda durch Kühlung variiert werden. Die Kühlung kann auf unterschiedliche Weisen erfolgen, so kann die zum Verbrennen angesaugte Luft entsprechend gekühlt werden, oder man kann einen Kraftstoff mit sehr großer Verdampfungsenthalpie, etwa Methanol, verwenden, oder man kann eine Wassereinspritzung beim Verbrennungsvorgang vornehmen, man kann auch dem heißen Alterungsgas kalte Luft oder gekühltes, aus der Katalysatoreinrichtung austretendes Gas zumischen. Das letztere, rezirkulierte Gas kann man beispielsweise über Wärmetauscher, durch Wassereinspritzung, durch Zusetzen kalter Luft od.dgl. kühlen.

Die Temperatur des der Katalysatoreinrichtung zuzuführenden Alterungsgases kann unabhängig von der Einstellung von Lambda durch die Kühlung variiert werden.

Als Kraftstoff wird zweckmäßigerweise ein schwefelarmer Kraftstoff, der vorzugsweise weniger als 10 ppm Schwefel, insbesondere weniger als 5 ppm Schwefel enthält, mit Verbrennungsluft verbrannt, wobei so standardisiertes Alterungsgas mit einer geeigneten Temperatur größer etwa 700°C, vorzugsweise im Bereich von etwa 1000° bis etwa 1250°C, mittels eines Heißluftgebläses durch die Katalysatoreinrichtung hindurch geblasen wird. Bei einem Kraftstoff mit einem sehr geringen Schwefelanteil wird ein chemisches Altern bzw. ein Vergiften der Katalysatoreinrichtung während des Alterns vermieden. Dadurch kann eine nachträgliche Stabilisierungsphase des Katalysators im Fahrzeug entfallen.

Schwefelhaltige Kraftstoffe mit Schwefelgehalten > 50 ppm können aber ebenfalls zur Erzeugung des Alterungsgases eingesetzt werden, zumal bei Temperaturen über 980°C durch die hohe Temperatur eine Zersetzung der dann im Alterungsgas enthaltenen Schwefelverbindungen stattfindet, so daß die Katalysatoreinrichtung nicht vergiftet wird.

Das Verhältnis von Kraftstoff und Verbrennungsluft kann in vorbestimmten Zyklen variiert werden. Auf diese Weise kann die zu alternde Katalysatoreinrichtung mit unterschiedlichen Alterungsgaszusammensetzungen und Alterungsgastemperaturen entsprechend einem Belastungskollektiv, wie es insbesondere einem gemischten Fahrzeugbetrieb entspricht, belastet werden. So kann mit Hilfe einer Kombination aus einem Brenner und einem Gebläse ein spezielles Heißabgas hergestellt werden, das durch die Katalysatoreinrichtung geführt wird. Durch das Verstellen der Parameter Luft und Kraftstoff kann die Katalysatoreinrichtung zyklischen thermischen Belastungen unterzogen werden, und erfährt somit Bedingungen wie im realen Fahrbetrieb. Die durchgesetzte Luftmasse entspricht dabei der Luftmasse wie sie beispielsweise im gemischten Fahrzeugflottenbetrieb vorkommt. Ein typischer Alterungszyklus liegt in einem Temperaturbereich von 1000 bis 1250°C. - Bei synthetischer Herstellung des Alterungsgases ist dieses entsprechend möglich.

Es läßt sich auch ein spezieller Alterungszyklus verwenden, der dazu geeignet ist, das Anspringverhalten der Katalysatoreinrichtung (Light-off Temperatur) am Prüfstand nachzubilden.

Die Katalysatoreinrichtung kann mehrfach jeweils nach einem Alterungsschritt einer Diagnose unterworfen werden, wobei das Amplitudenverhältnis einer Hinter-Kat-Sonde als ein Maß für die Sauerstoffspeicherfähigkeit mit einem Modell verglichen, wobei das Modell mit einem relevanten Grenzkatalysator abgestimmt und ein Grenzwert aus dem Amplitudenverhältnis zwischen dem aktuellen Signal der Hinter-Kat-Sonde im Vergleich zum modellierten Hinter-Kat-Sondensignal ermittelt wird, wobei das Hinter-Kat-Sondensignal als Maß für die Sauerstoffspeicherfähigkeit der Katalysatoreinrichtung genommen wird.

Auf diese Weise wird eine systematische Alterung von Katalysatoreinrichtungen erreicht. Speziell im Hinblick auf die Verfügbarkeit von Prototypenteilen während der Applikation und die damit verbundenen Kosten, ist ein Alterungsverfahren zur schrittweisen und reproduzierbaren Alterung von Katalysatoreinrichtungen ein wichtiger Beitrag zur Kosten- und Zeitreduktion bei der Erstellung von gealterten Bauteilen, sowie zur Erfüllung der LEVII-Gesetzgebung. Insbesondere das Begrenzen der NOx-Grenzen, sowie das Altern von Gesamtabgasanlagen kann vorgenommen werden.

Das Altern der Katalysatoreinrichtungen erfolgt so unter realitätsnahen Bedingungen, die daher nahezu alle aus der Praxis bekannten Alterungsmechanismen ermöglicht. Die thermale Deaktivierung der Katalysatoreinrichtung führt zu einer Verkleinerung der Oberfläche der aktiven Zentren (Edelmetalle), bedingt durch Rekristallisation. Des weiteren kann es zu einer Diffusion der Edelmetalle in der Beschichtung kommen, wodurch die aktiven Zentren schlechter oder gar nicht mehr zugänglich sind und daher die Aktivität der Katalysatoreinrichtung abnimmt. Neben diesen physikalischen Alterungsmechanismen finden bei der hohen Temperatur auch chemische Reaktionen statt. Bekannt sind Reaktionen zwischen Edelmetall und Washcoat sowie Reaktionen innerhalb des Washcoats. Diese Reaktionen können durch Abgaskomponenten wie z.B. CO₂ und H₂O begünstigt werden. Besonders das Altern in wasserdampfhaltiger Atmosphäre ist neben den Parametern Sauerstoffgehalt, Druck und Temperatur entscheidend für das Alterungsverhalten der Katalysatoreinrichtung.

Mit einer Kombination aus Gaszusammensetzung und Gastemperatur die auf ein Niveau angehoben wird, die weder den Monolithen noch den Washcoat beschädigt, werden die Alterungsprozesse in der Katalysatoreinrichtung zusätzlich gefördert. Die Prozesse bewirken eine Minderung der Aktivität der Katalysatoreinrichtung aufgrund einer Abnahme der aktiven Oberfläche. Mit Hilfe dieses Alterungsverfahrens kann nun eine schrittweise Alterung der Katalysatoreinrichtung durchgeführt werden.

Das Alterungsverfahren ist insbesondere bei 3-Wege-Katalysatoren für Kraftfahrzeuge, NOx-Katalysatoren, Oxi-Katalysatoren, Reformern für Reduktionsmittel und für Brennstoffzellen verwendbar.

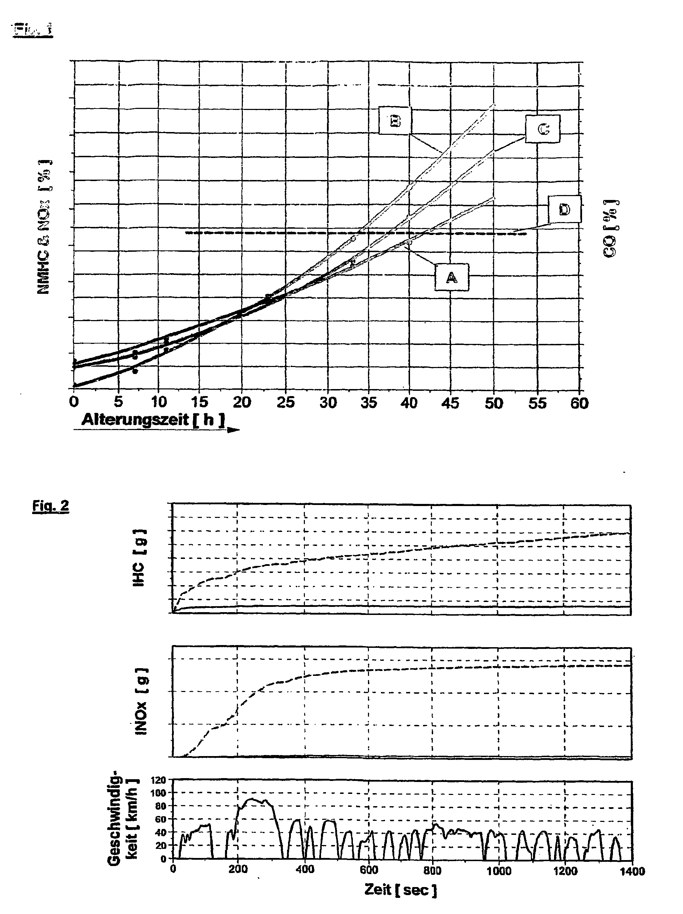

In Fig. 1 ist der Emissionsverlauf bei einer erfindungsgemäßen Katalysatoralterung gegenüber der Zeit [h] aufgetragen, wobei Kurve A die CO-Emissionen [%], Kurve B die NOx-Emissionen [%] und Kurve C die Kohlenwasserstoff-Emissionen (ohne Methan) [%] wiedergeben. Die gestrichelte Kurve D stellt den Grenzwert für die Kohlenwasserstoff-Emission dar.

Fig. 2 zeigt einen kumulierten Emissionsverlauf in dem in den USA vorgeschriebenen FTP72-Test (der dem europäischen NEDC-Test entspricht). Hierbei wird eine stabilisierte, d.h. im Neuzustand in einem Kraftfahrzeug nach ca. 4000 km eingefahrene Katalysatoreinrichtung mit einer entsprechend dem erfindungsgemäßen Verfahren gealterten Katalysatoreinrichtung verglichen. Die Alterung einer Katalysatoreinchtung nach dem erfindungsgemäßen Verfahren hat, wie Fig. 2 zeigt, die Minderung der Aktivität gegenüber HC, CO und NOx zur Folge. Hierbei zeigt das untere Diagramm von Fig. 2 den Geschwindigkeitsverlauf beim FTP72-Test, wobei die Geschwindigkeit in km/h gegenüber der Zeit in sec aufgetragen ist. Für dieses zeitliche Geschwindigkeitsprofil zeigt das obere Diagramm von Fig. 2 die kumulierten Kohlenwasserstoffemissionen in g aufgetragen über die Zeit in sec, und das mittlere Diagramm die kumulierten Stickoxidemissionen in g aufgetragen über die Zeit in sec, wobei die Emissionen an der Austrittsseite der Katalysatoreinrichtung bestimmt wurden, und zwar für die erfindungsgemäß gealterte Katalysatoreinrichtung gestrichelt und für die stabilisierte Katalysatoreinrichtung durchgezogen.

Der Modalschrieb der Kohlenwasserstoffemissionen und Stickoxidemissionen gemäß Fig. 2 zeigt, wie sich die Verteilung der Emissionen im Vergleich zwischen einer stabilisierten Katalysatoreinrichtung und einer erfindungsgemäß gealterten Katalysatoreinrichtung im FTP72 Test darstellt. So kann man zum einen erkennen, daß die Light-Off-Temperatur der erfindungsgemäß gealterten Katalysatoreinrichtung gegenüber einer stabilisierten Katalysatoreinrichtung deutlich ansteigt, und zum anderen, daß während des gesamten Tests sowohl die kumulierten Kohlenwasserstoffemissionen als auch die kumulierten Stickoxidemissionen weiter zunehmen, während die kumulierten Emissionen bei einer stabilisierten Katalysatoreinrichtung nach einem anfänglichen Anstieg gleich bleiben.

Dieses Verhalten spiegelt sich auch direkt in der Abstimmung der dafür zuständigen Diagnose der Katalysatorkonvertierung wieder. Bei dieser Diagnose wird einmal pro Fahrzyklus das Amplitudenverhältnis einer Hinter-Kat-Sonde, einer am Katalysatorausgang befindlichen Sonde für den Sauerstoffgehalt des dort austretenden Gases, als ein Maß für die Sauerstoffspeicherfähigkeit mit einem Modell verglichen. Das Modell wird mit dem OBD relevanten Grenzkatalysator abgestimmt und ein Grenzwert aus dem Amplitudenverhältnis zwischen dem aktuellen Signal der Hinter-Kat-Sonde im Vergleich zum modellierten Hinter-Kat-Sondensignal ermittelt. Hierbei wird das Hinter-Kat-Sondensignal als Maß für die Sauerstoffspeicherfähigkeit der Katalysatoreinrichtung genommen.

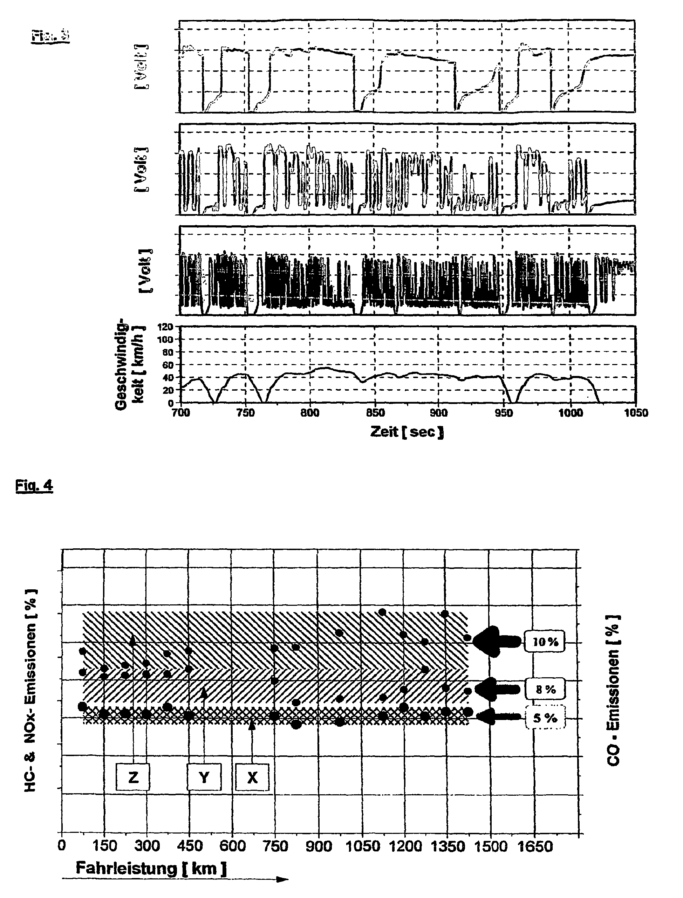

Fig. 3 zeigt - im Vergleich zu Fig. 2 zeitlich gespreizt - das Hinter-Kat-Sondensignal in Volt gegenüber der Zeit in sec aufgetragen im oberen Diagramm für eine stabilisierte Katalysatoreinrichtung, im mittleren Diagramm für eine dauerlaufgealterte Katalysatoreinrichtung, d.h. eine Katalysatoreinrichtung, die 100.000 Meilen in einem Kraftfahrzeug gealtert ist, und im unteren Diagramm für eine erfindungsgemäß gealterte Katalysatoreinrichtung. Die Trennschärfe des Hinter-Kat-Sondensignals zwischen einer dauerlaufgealterten Katalysatoreinrichtung, und einem (OBD) Grenzkatalysator stellt ein wichtiges Beurteilungskriterium bezüglich einer sicheren Katalysatorüberwachung im Feldbetrieb dar. Diesbezüglich ist aus Fig. 3 auffällig, daß eine erfindungsgemäß gealterte Katalysatoreinrichtung ein über dem Abgastest konstantes Hinter-Kat-Sondensignal ausgibt, wobei die Aufeinanderfolge der Signale deutlich ausgeprägt und deren Amplitude im wesentlichen gleichbleibend ist. Dieses Verhalten vereinfacht das Abstimmen der Diagnose, da der Erkennungs- und Diagnosebereich somit frei im Abgastest gewählt werden kann. In Bezug auf den US-amerikanischen Gesetzgeber "CARB", der kontinuierlich Feldüberwachungen vornimmt und die Diagnosen im kundenrelevanten Fahrzyklus überprüft, ist dies ein wichtiger Aspekt.

Fig. 4 zeigt ein Diagramm bezüglich der Reproduzierbarkeit der Emissionen in % über die Fahrleistung in km bei einer erfindungsgemäß gealterten Katalysatoreinrichtung, wobei das Band X das Streuband der Kohlenwasserstoffemissionen, das Band Y das Streuband der CO-Emissionen und das Band Z das Streuband der NOx-Emissionen, jeweils mit entsprechenden Meßpunkten, gemessen über das Hinter-Kat-Sondensignal, darstellt. Hieraus ist ersichtlich, daß die Streuung der Meßwerte relativ gering und die jeweiligen Emissionen in Bezug auf die Fahrleistung stabil sind. Die so erzielte Laufzeitstabilität ist ein weiteres wichtiges Beurteilungskriterium für eine gealterte Katalysatoreinrichtung, um während der Applikation reproduzierbare Ergebnisse zu erhalten. Die erfindungsgemäß gealterte Katalysatoreinrichtung zeigt ein nahezu konstantes Verhalten über der dargestellten Laufzeit von ca. 1400km. So bewegen sich die Kohlenwasserstoffemissionen in einem Streuband von etwa 5%, und die Stickoxidemissionen in einem Streuband von etwa 10%. Somit hat sich die vermessene Katalysatoreinrichtung nach der Alterung weder deutlich verbessert noch verschlechtert.

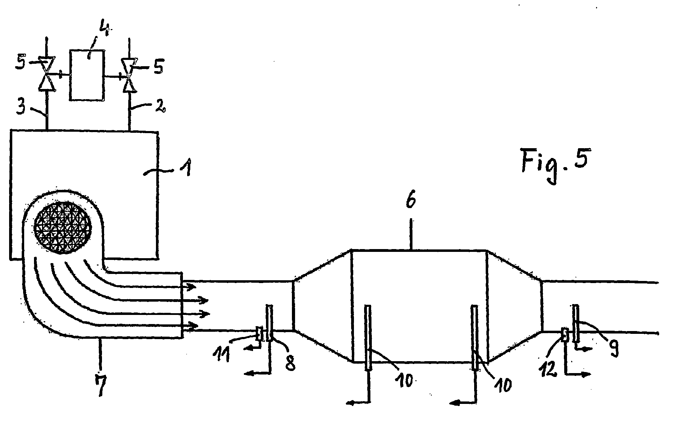

Fig. 5 zeigt schematisch eine Ausführungsform einer Vorrichtung zum künstlichen Altern einer Katalysatoreinrichtung. Diese umfaßt eine Einrichtung 1 zum Erzeugen eines heißen Alterungsgases, etwa einen Brenner (oder eine Gasturbine) für einen aus Kohlenwasserstoffen bestehenden Kraftstoff, der der Einrichtung 1 über eine Leitung 2 zugeführt wird. Ferner wird der Einrichtung 1 über eine weitere Leitung 3 Verbrennungsluft zugeführt, wobei eine Regelung 4 vorgesehen ist, die über Ventile 5 das Verhältnis von Kraftstoff und Verbrennungsluft nach einem vorbestimmten Programm einstellt. Das von der Einrichtung 1 als Alterungsgas erzeugte heiße Abgas wird dabei über das Verhältnis von Kraftstoff zu Verbrennungsluft derart eingestellt, daß sich eine Temperatur zwischen etwa 1000°C und etwa 1250°C am Eingang einer zu alternden Katalysatoreinrichtung 6 ergibt. Das Alterungsgas wird dabei mittels einer Fördereinrichtung 7, etwa einem Heißgasgebläse, die für einen Alterungsgasdurchsatz durch die Katalysatoreinrichtung 6 beispielsweise entsprechend einem gemischten Flottenbetrieb sorgt, der Katalysatoreinrichtung 6 zugeführt und seine Temperatur am Eingang der Katalysatoreinrichtung 6 mittels eines Temperaturfühlers 8 sowie ebenfalls am Ausgang der Katalysatoreinrichtung 6 mittels eines weiteren Temperaturfühlers 9 gemessen. Außerdem wird die Temperatur in der Katalysatoreinrichtung 6 vorne und hinten mittels zweier zusätzlicher Temperaturfühler 10 gemessen. Schließlich wird der Sauersiofigehalt des Alterungsgases vor und nach der Katalysatoreinrichtung 6 mittels zweier Sauerstoffsonden 11, 12 gemessen, wobei die Sauerstoffsonde 12 die Hinter-Kat-Sonde bildet.

Der im Brenner 1 zu verbrennende, gegebenenfalls schwefelarme Kraftstoff ist je nach Katalysatoreinrichtung 6 ein für Otto- oder Dieselmotoren geeigneter Kraftstoff.

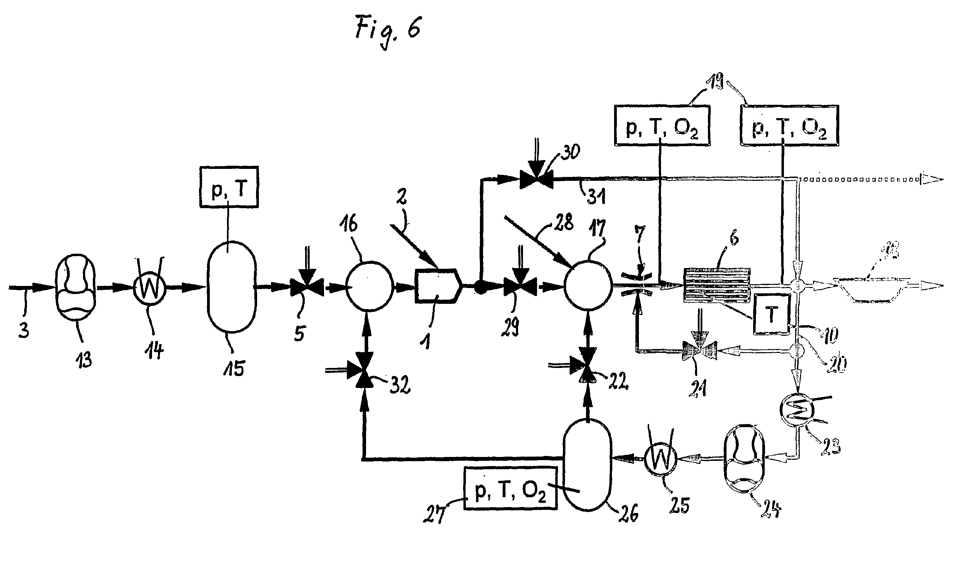

Fig. 6 zeigt schematisch eine weitere Ausführungsform einer Vorrichtung zum künstlichen Altern einer Katalysatoreinrichtung, bei der im einzelnen dargestellt ist, daß Verbrennungsluft über eine Leitung 3, eine Fördereinrichtung hierfür etwa in Form einer Pumpe 13, einen Wärmetauscher 14 für Verbrennungsluft, über den die Temperatur, die zusammen mit dem Druck in der Leitung 3 an einer Meßstelle 15 gemessen wird, der letzteren einstellbar ist, und über das Ventil 5 einem Mischer 16 zusammen mit Kraftstoff über die Leitung 2 zugeführt wird. Das im Mischer 16 erzeugte Gemisch aus Verbrennungsluft und Kraftstoff wird der Einrichtung 1 zum Erzeugen von heißem Alterungsgas, hier in Form eines Brenners, zugeführt. Der Einrichtung 1 ist ein Mischer 17 und die Einrichtung 7 zum Fördern des heißen Alterungsgases nachgeschaltet, das von der Einrichtung 7 in die Katalysatoreinrichtung 6 gefördert wird. Der Katalysatoreinrichtung 6 ist eine Turbine oder Drossel 18 nachgeschaltet, von der das Gas schließlich austritt.

Vor und nach der Katalysatoreinrichtung 6 ist jeweils eine Meßstelle 19 für Sauerstoffgehalt, Gastemperatur und gegebenenfalls Gasdruck vorgesehen, während gegebenenfalls auch die Temperatur mittels entsprechender Temperaturfühler 10 in der Katalysatoreinrichtung gemessen werden kann.

Austrittseitig zur Katalysatoreinrichtung 6 ist ein Abzweig für eine Leitung 20 zum Rezirkulieren von aus der Katalysatoreinrichtung 6 austretendem Gas vorgesehen, die über ein Drosselventil 21 gesteuert mit der Einrichtung 7, wenn diese als Saugstrahlpumpe ausgebildet ist, zu deren Betrieb verbunden ist.

Anstelle der Ausbildung als Saugstrahlpumpe kann die Einrichtung 7 aber auch als Heißgasgebläse, Strömungsverdichter oder Dreh- oder Hubkolbenverdichter ausgebildet sein.

Die Leitung 20 kann aber auch stattdessen oder zusätzlich über ein Drosselventil 22 mit dem Mischer 17 verbunden sein, um so Gas von der Austrittsseite der Katalysatoreinrichtung 6 dem Alterungsgasstrom beizumischen. Das so rezirkulierte Gas kann gegebenenfalls über einen Wärmetauscher 23 gekühlt, über eine Fördereinrichtung 24, etwa eine Pumpe, und gegebenenfalls über einen weiteren Wärmetauscher 25 zur Rückkühlung des durch die Fördereinrichtung 24 verdichteten Gases dem Mischer 17 zugeführt werden. Ferner kann ein Speicherbehälter 26 mit einer Meßstelle 27 für den Sauerstoffgehalt, die Gastemperatur und den Gasdruck zwischengeschaltet sein.

Dem Mischer 17 können über eine Leitung 28 auch zusätzliche Stoffe zugeführt werden, die mit dem Alterungsgas vermischt werden sollen.

Dem Mischer 17 kann ein Drosselventil 29 vorgeschaltet sein, wobei zwischen der Einrichtung 2 und dem Drosselventil 29 eine mit einem Drosselventil 30 versehene Leitung 31 abzeigt, um überschüssiges Alterungsgas abzuführen.

Der Speicher 26 kann auch über ein Drosselventil 32 mit der Leitung 2 bzw. dem Mischer 16 verbunden sein, um eine Gasrezirkulation zur Kraftstoff-Verbrennungsluft-Mischung vorzunehmen.

Ersichtlich wird es bei einfachem apparativem Aufbau ermöglicht, Alterungsgase verschiedener Drücke, Temperaturen und Qualitäten (Luftzahlen) herzustellen, wobei die Zustandsgrößen über entsprechende (nicht dargestellte) Regler zeitabhängig oder konstant eingestellt werden können. Eine Temperatur wie im motorischen Betrieb von Kraftfahrzeugen kann durch Zumischen von gekühltem Gas vom Ausgang der Katalysatoreinrichtung 6 zum von der Einrichtung 1 erzeugten Alterungsgas eingestellt werden.

Um ein Überhitzen der Katalysatoreinrichtung 6 beim Anfahren der Vorrichtung zum Altern zu vermeiden, kann beim Starten der gesamte Alterungsgasstrom an der Katalysatoreinrichtung über die Leitung 31 vorbeigeführt werden. Eine Teilmenge hiervon kann auch gekühlt über die Leitung 20 zurückgeführt werden, bis die Zielwerte für Luftverhältnis und Temperatur erreicht sind.

Der Verstellbereich von Durchsatz, Druck, Temperatur und Luftverhältnis des Alterungsgases kann zur Verbesserung des dynamischen Verhaltens vorgenommen werden durch Zumischung von Gas von der Austrittsseite der Katalysatoreinrichtung 6 vor und/oder hinter die Einrichtung 1 (etwa den Brenner), und zwar gekühlt oder ungekühlt. Ein Verdichtung von Alterungsgas und Frischluft auf einen erhöhten, beispielsweise den doppelten Druck führt dazu, daß der Massenstrom durch die verschiedenen Ventile unabhängig vom Gegendruck und damit nur noch eine Funktion der Öffnung und Dichte vor dem Ventil ist. Eine dynamische Regelung von Massenstrom, Temperatur und Lambda kann abhängig von der Größe der Speichervolumina Zusatzmaßnahmen erfordern, so etwa eine Lambdamessung im von der Austrittsseite der Katalysatoreinrichtung 6 rezirkuliertem, gegebenenfalls gespeicherten Gas, Abblasen eines Teilstroms des von der Einrichtung 1 gelieferten Alterungsgases oder Zumischen von gekühltem bzw. ungekühlten Gas.

Als Zusatzstoffe können dem Mischer 2 beispielsweise durch ihre Verdampfungswärme die Temperatur absenkende Zusätze oder solche zugeführt werden, die mit dem Katalysatormaterial chemisch reagieren. Insbesondere die zweite Möglichkeit erlaubt eine Untersuchung von selektiv katalytisch wirkenden Abgasnachbehandlungsstrategien, wobei gegebenenfalls synthetisches, heißes Alterungsgas verwendet wird, dem beispielsweise Stickoxide beigemischt werden.

Wird als Zusatzstoff ein Brennstoff zugegeben, können auch durch die Reaktionswärme sehr hohe Temperaturen in der Katalysatoreinrichtung 6 erreicht werden, durch die beispielsweise die Wirkung von kurzfristig erhöhten Kohlenwasserstoffanteilen im Abgas von Brennkraftmaschinen nachgestellt werden können.

## Patentansprüche

1. Verfahren zum künstlichen Altern einer zum Einsatz an einem Katalysatorprüfstand dienenden Katalysatoreinrichtung für die Umsetzung von Abgasen mit wenigstens einem Bestandteil aus der Gruppe umfassend C-, HC- und NOx-haltige Bestandteile, wobei man die Katalysatoreinrichtung mit heißem Alterungsgas, das wenigstens einen Bestandteil aus der Gruppe umfassend C-, HC-und NOx-haltige Bestandteile umfaßt, durchströmen lässt, wobei das heiße Alterungsgas durch eine zum Einsatz an einem Katalysatorprüfstand dienende Katalysatoreinrichtung, geeignet für die Umsetzung von Abgasen mit C-, HC-und/oder NOx-haltigen Bestandteilen, hindurch geführt wird, **dadurch gekennzeichnet, dass** aus der Katalysatoreinrichtung austretendes Gas teilweise dem der Katalysatoreinrichtung zuzuführenden Alterungsgas zur Rezirkulation beigemischt wird.

2. Verfahren nach Anspruch 1, **dadurch gekennzeichnet, daß** das heiße Alterungsgas ein durch Verbrennung eines C-haltigen Kraftstoffs erzeugtes Abgas ist.

3. Verfahren nach Anspruch 2, **dadurch gekennzeichnet, daß** das heiße Abgas in einem Brenner durch Verbrennung mit Verbrennungsluft erzeugt wird.

4. Verfahren nach Anspruch 2, **dadurch gekennzeichnet, daß** das heiße Abgas in einer Gasturbine erzeugt wird.

5. Verfahren nach einem der Ansprüche 1 bis 4, **dadurch gekennzeichnet, daß** das heiße Alterungsgas mittels eines Gebläses durch die Katalysatoreinrichtung geführt wird.

6. Verfahren nach einem der Ansprüche 1 bis 5, **dadurch gekennzeichnet, daß** das Alterungsgas mit einer Temperatur > 250°C in die Katalysatoreinrichtung eingeführt wird.

7. Verfahren nach Anspruch 6, **dadurch gekennzeichnet, daß** das Alterungsgas mit einer Temperatur > 700°C in die Katalysatoreinrichtung eingeführt wird.

8. Verfahren nach Anspruch 7, **dadurch gekennzeichnet, daß** das Alterungsgas mit einer Temperatur von etwa 1000°C bis etwa 1250°C in die Katalysatoreinrichtung eingeführt wird.

9. Verfahren nach einem der Ansprüche 3 bis 8, **dadurch gekennzeichnet, daß** das heiße Abgas bei einem Verbrennungsbetrieb mit Lambda > 1 erzeugt wird.

10. Verfahren nach Anspruch 9, **dadurch gekennzeichnet, daß** das heiße Abgas bei einem Verbrennungsbetrieb mit Lambda > 1,5 erzeugt wird.

11. Verfahren nach einem der Ansprüche 2 bis 10, sofern Ansprüche 5 und 6 auf Anspruch 2 rückbezogen sind, **dadurch gekennzeichnet, daß** als Kraftstoff ein brennbares, C-haltiges Fluid aus der Gruppe aus gasförmigen und flüssigen Fluiden verwendet wird.

12. Verfahren nach Anspruch 11, **dadurch gekennzeichnet, daß** als Kraftstoff schwefelarmer Kraftstoff verwendet wird.

13. Verfahren nach Anspruch 12, **dadurch gekennzeichnet, daß** ein Kraftstoff mit einem Schwefelgehalt < 10 ppm verwendet wird.

14. Verfahren nach Anspruch 13, **dadurch gekennzeichnet, daß** ein Kraftstoff mit einem Schwefelgehalt < 5 ppm verwendet wird.

15. Verfahren nach einem der Ansprüche 2 bis 14, sofern Ansprüche 5 und 6 auf Anspruch 2 rückbezogen sind, **dadurch gekennzeichnet, daß** das Verhältnis von Kraftstoff und Verbrennungsluft in vorbestimmten Zyklen variiert wird.

16. Verfahren nach Anspruch 15, **dadurch gekennzeichnet, daß** die Katalysatoreinrichtung mit unterschiedlichen Alterungsgaszusammensetzungen und Alterungsgastemperaturen entsprechend einem Belastungskollektiv belastet wird.

17. Verfahren nach Anspruch 16, **dadurch gekennzeichnet, daß** die Katalysatoreinrichtung entsprechend einem gemischten Fahrzeugbetrieb belastet wird.

18. Verfahren nach einem der Ansprüche 1 bis 17, **dadurch gekennzeichnet, daß** die Katalysatoreinrichtung mehrfach jeweils nach einem Alterungsschritt einer Diagnose unterworfen wird, wobei das Amplitudenverhältnis einer Hinter-Kat-Sonde als ein Maß für die Sauerstoffspeicherfähigkeit mit einem Modell verglichen wird, wobei das Modell mit einem relevanten Grenzkatalysator abgestimmt und ein Grenzwert aus dem Amplitudenverhältnis zwischen dem aktuellen Signal der Hinter-Kat-Sonde im Vergleich zum modellierten Hinter-Kat-Sondensignal ermittelt wird, wobei das Hinter-Kat-Sondensignal als Maß für die Sauerstoffspeicherfähigkeit der Katalysatoreinrichtung genommen wird.

19. Verfahren nach einem der Ansprüche 1 bis 18, **dadurch gekennzeichnet, daß** das der Katalysatoreinrichtung zugeführte Alterungsgas gekühlt wird.

20. Verfahren nach Anspruch 19, **dadurch gekennzeichnet, daß** das der Katalysatoreinrichtung zugeführte Alterungsgas durch aus der Katalysatoreinrichtung austretendes Gas gekühlt wird.

21. Verfahren nach Anspruch 20, **dadurch gekennzeichnet, dass** aus der Katalysatoreinrichtung austretendes Gas gekühlt dem der Katalysatoreinrichtung zuzuführenden Alterungsgas beigemischt wird.

22. Verfahren nach einem der Ansprüche 1 bis 21, **dadurch gekennzeichnet, daß** die Temperatur des der Katalysatoreinrichtung zugeführten Alterungsgases unabhängig von der Einstellung des Lambda-Wertes bei der Erzeugung des Alterungsgases durch Kühlung variiert wird.

23. Verfahren nach einem der Ansprüche 1 bis 22, **dadurch gekennzeichnet, daß** dem heißen Alterungsgas wenigstens eine Komponente zum Einstellen einer bestimmten Zusammensetzung des Alterungsgases zugemischt wird.

24. Verfahren nach Anspruch 23, **dadurch gekennzeichnet, daß** wenigstens eine Komponente aus der Gruppe umfassend C- und HC-haltige Gasbestandteile zugemischt wird.

25. Verfahren nach einem der Ansprüche 1 bis 24, **dadurch gekennzeichnet, daß** das Alterungsgas synthetisch erzeugt wird.

26. Verfahren nach einem der Ansprüche 1 bis 25, **dadurch gekennzeichnet, daß** eine Katalysatoreinrichtung aus der Gruppe umfassend einen 3-Wege-Katalysator, einen NOx-Katalysator, einen Oxi-Katalysator, einen Reformer für Reduktionsmittel und einen Reformer für Brennstoffzellen mit dem Alterungsgas gealtert wird.

27. Vorrichtung zum künstlichen Altern einer zum Einsatz an einem Katalysatorprüfstand dienenden Katalysatoreinrichtung (6) für die Umsetzung von Abgasen mit wenigstens einem Bestandteil aus der Gruppe umfassend C-, HC- und NOx-haltige Bestandteile, wobei eine Einrichtung (1) zum Erzeugen eines heißen Alterungsgases und eine Einrichtung (7) zum Fördern des heißen Alterungsgases durch die Katalysatoreinrichtung (6) vorgesehen ist, **dadurch gekennzeichnet, dass** eine Einrichtung zur teilweisen Rezirkulation von aus der Katalysatoreinrichtung (6) austretendem Gas zum Alterungsgas vorgesehen sind.

28. Vorrichtung nach Anspruch 27, **dadurch gekennzeichnet, daß** die Einrichtung (1) zum Erzeugen eines heißen Alterungsgases eine Einrichtung zur Verbrennung eines C-haltigen Kraftstoffs mit Verbrennungsluft ist.

29. Vorrichtung nach Anspruch 27 oder 28, **dadurch gekennzeichnet, daß** die Einrichtung (7) zum Fördern des heißen Alterungsgases durch die Katalysatoreinrichtung ein Heißluftgebläse ist.

30. Vorrichtung nach Anspruch 28, **dadurch gekennzeichnet, daß** die Einrichtung (7) zum Fördern des heißen Alterungsgases durch die Katalysatoreinrichtung eine Saugstrahlpumpe ist.

31. Vorrichtung nach einem der Ansprüche 27 bis 30, **dadurch gekennzeichnet, daß** ein Temperaturfühler (8) zum Messen der Temperatur des der Katalysatoreinrichtung (6) zuzuführenden Alterungsgases vorgesehen ist.

32. Vorrichtung nach Anspruch 31, **dadurch gekennzeichnet, daß** eine Einrichtung zum Regeln der Temperatur des der Katalysatoreinrichtung (6) zuzuführenden Alterungsgases vorgesehen ist.

33. Vorrichtung nach einem der Ansprüche 27 bis 32, **dadurch gekennzeichnet, daß** eine Einrichtung zum Kühlen des der Katalysatoreinrichtung (6) zuzuführenden Alterungsgases vorgesehen ist.

34. Vorrichtung nach Anspruch 33, **dadurch gekennzeichnet, daß** die Einrichtung zum Kühlen des der Katalysatoreinrichtung (6) zuzuführenden Alterungsgases eine Einrichtung (23, 25) zum Kühlen von rezirkuliertem, von aus der Katalysatoreinrichtung (6) austretendem Gas umfaßt.

35. Vorrichtung nach einem der Ansprüche 27 bis 34, **dadurch gekennzeichnet, daß** eine Sauerstoffsonde (12) am Ausgang der Katalysatoreinrichtung (6) zur Überwachung der Katalysatoreinrichtung (6) vorgesehen ist.

36. Vorrichtung nach einem der Ansprüche 27 bis 35, **dadurch gekennzeichnet, daß** eine Sauerstoffsonde (11) zur Überwachung des der Katalysatoreinrichtung (6) zuzuführenden Alterungsgases vorgesehen ist.

## Claims

1. Method for artificially ageing a catalyst device for use on a catalyst test bench for converting exhaust gases comprising at least one constituent from the group consisting of C-, HC- and NOx-containing constituents, in which method hot ageing gas which comprises at least one constituent from the group consisting of C-, HC- and NOx-containing constituents is allowed to flow through the catalyst device, the hot ageing gas being passed through a catalyst device which is for use on a catalyst test bench and is suitable for the conversion of exhaust gases comprising C-, HC- and/or NOx-containing constituents, **characterized in that** gas which emerges from the catalyst device is partially admixed with the ageing gas to be fed to the catalyst device, in order to be recirculated.

2. Method as claimed in claim 1, **characterized in that** the hot ageing gas used is an exhaust gas generated by combustion of a C-containing fuel.

3. Method as claimed in claim 2, **characterized in that** the hot exhaust gas is generated in a burner by combustion with combustion air.

4. Method as claimed in claim 2, **characterized in that** the hot exhaust gas is generated in a gas turbine.

5. Method as claimed in one of claims 1 to 4, **characterized in that** the hot ageing gas is passed through the catalyst device by means of a blower.

6. Method as claimed in one of claims 1 to 5, **characterized in that** the ageing gas is introduced into the catalyst device at a temperature of > 250°C.

7. Method as claimed in claim 6, **characterized in that** the ageing gas is introduced into the catalyst device at a temperature of > 700°C.

8. Method as claimed in claim 7, **characterized in that** the ageing gas is introduced into the catalyst device at a temperature of from approximately 1000°C to approximately 1250°C.

9. Method as claimed in one of claims 3 to 8, **characterized in that** the hot exhaust gas is generated during combustion operation with lambda > 1.

10. Method as claimed in claim 9, **characterized in that** the hot exhaust gas is generated during combustion operation with lambda > 1.5.

11. Method as claimed in one of claims 2 to 10, as far as claims 5 and 6 depend on claim 2, **characterized in that** the fuel used is a combustible C-containing fluid selected from the group consisting of gaseous and liquid fluids.

12. Method as claimed in claim 11, **characterized in that** the fuel used is low-sulfur fuel.

13. Method as claimed in claim 12, **characterized in that** a fuel with a sulfur content of < 10 ppm is used.

14. Method as claimed in claim 13, **characterized in that** a fuel with a sulfur content of < 5 ppm is used.

15. Method as claimed in one of claims 2 to 14, as far as claims 5 and 6 depend on claim 2, **characterized in that** the ratio of fuel to combustion air is varied in predetermined cycles.

16. Method as claimed in claim 15, **characterized in that** the catalyst device is subjected to different ageing gas compositions and ageing gas temperatures corresponding to a combined load cycle.

17. Method as claimed in claim 16, **characterized in that** the catalyst device is subjected to load corresponding to mixed vehicle operation.

18. Method as claimed in one of claims 1 to 17, **characterized in that** the catalyst device is subjected a number of times, in each case after an ageing step, to a diagnosis, in which the amplitude ratio of a post-cat sensor as a measure of the oxygen storage capacity is compared with a model, the model being matched to a relevant limit catalyst and a limit value being determined from the amplitude ratio between the current signal of the post-cat sensor compared to the modeled post-cat sensor signal, the post-cat sensor signal being taken as a measure of the oxygen storage capacity of the catalyst device.

19. Method as claimed in one of claims 1 to 18, **characterized in that** the ageing gas fed to the catalyst device is cooled.

20. Method as claimed in claim 19, **characterized in that** the ageing gas fed to the catalyst device is cooled by gas emerging from the catalyst device.

21. Method as claimed in claim 20, **characterized in that** gas emerging from the catalyst device is admixed in cooled form with the ageing gas that is to be fed to the catalyst device.

22. Method as claimed in one of claims 1 to 21, **characterized in that** the temperature of the ageing gas fed to the catalyst device is varied by cooling independently of the setting of the lambda value during generation of the ageing gas.

23. Method as claimed in one of claims 1 to 22, **characterized in that** at least one component is admixed to the hot ageing gas in order to set a defined composition of the ageing gas.

24. Method as claimed in claim 23, **characterized in that** at least one component selected from the group consisting of C- and HC-containing gas constituents is admixed.

25. Method as claimed in one of claims 1 to 24, **characterized in that** the ageing gas is generated synthetically.

26. Method as claimed in one of claims 1 to 25, **characterized in that** a catalyst device selected from the group consisting of a 3-way catalyst, an NOx catalyst, an oxidation catalyst, a reformer for reducing agent and a reformer for fuel cells is aged using the ageing gas.

27. Apparatus for artificially ageing a catalyst device (6) for use on a catalyst test bench for converting exhaust gases comprising at least one constituent from the group consisting of C-, HC- and NOx-containing constituents, in which a device (1) for generating a hot ageing gas and a device (7) for passing the hot ageing gas through the catalyst device (6) are provided, **characterized in that** a device for partial recirculation of gas emerging from the catalyst device (6) to the ageing gas is provided.

28. Apparatus as claimed in claim 27, **characterized in that** the device (1) for generating a hot ageing gas is a device for combustion of a C-containing fuel with combustion air.

29. Apparatus as claimed in claim 27 or 28, **characterized in that** the device (7) for passing the hot ageing gas through the catalyst device is a hot-air blower.

30. Apparatus as claimed in claim 28, **characterized in that** the device (7) for passing the hot ageing gas through the catalyst device is a suction jet pump.

31. Apparatus as claimed in one of claims 27 to 30, **characterized in that** a temperature sensor (8) is provided for measuring the temperature of the ageing gas that is to be fed to the catalyst device (6).

32. Apparatus as claimed in claim 31, **characterized in that** a device for controlling the temperature of the ageing gas that is to be fed to the catalyst device (6) is provided.

33. Apparatus as claimed in one of claims 27 to 32, **characterized in that** a device for cooling the ageing gas that is to be fed to the catalyst device (6) is provided.

34. Apparatus as claimed in claim 33, **characterized in that** the device for cooling the ageing gas that is to be fed to the catalyst device (6) comprises a device (23, 25) for cooling recirculated gas emerging from the catalyst device (6).

35. Apparatus as claimed in one of claims 27 to 34, **characterized in that** an oxygen sensor (12) is provided at the outlet of the catalyst device (6) for the purpose of monitoring the catalyst device (6).

36. Apparatus as claimed in one of claims 27 to 35, **characterized in that** an oxygen sensor (11) is provided for the purpose of monitoring the ageing gas that is to be fed to the catalyst device (6).

## Revendications

1. Procédé pour le vieillissement artificiel d'un système catalytique servant pour une utilisation à un banc d'essai catalytique pour la transformation de gaz d'échappement avec au moins un constituant du groupe comprenant des constituants contenant C-, HC- et NOx-, pour lequel on laisse passer à travers le système catalytique du gaz de vieillissement chaud, qui comprend au moins un constituant du groupe comprenant des constituants contenant C-, HC- et NOx-, pour lequel le gaz de vieillissement chaud est guidé à travers un système catalytique servant pour une utilisation à un banc d'essai catalytique de manière appropriée pour la transformation des gaz d'échappement, qui comprennent des constituants contenant C-, HC- et/ou NOx, **caractérisé en ce que** le gaz sortant du système catalytique est en partie ajouté pour un recyclage au gaz de vieillissement alimentant le système catalytique.

2. Procédé selon la revendication 1, **caractérisé en ce que** le gaz de vieillissement chaud est un gaz d'échappement généré par la combustion d'un combustible contenant C-.

3. Procédé selon la revendication 2, **caractérisé en ce que** le gaz d'échappement chaud est généré dans un brûleur par combustion avec de l'air de combustion.

4. Procédé selon la revendication 2, **caractérisé en ce que** le gaz d'échappement chaud est généré dans une turbine à gaz.

5. Procédé selon l'une des revendications 1 à 4, **caractérisé en ce que** le gaz de vieillissement chaud est guidé au moyen d'un ventilateur à travers le système catalytique.

6. Procédé selon l'une des revendications 1 à 5, **caractérisé en ce que** le gaz de vieillissement est introduit avec une température plus grande que 250 °C dans le système catalytique.

7. Procédé selon la revendication 6, **caractérisé en ce que** le gaz de vieillissement est introduit avec une température plus grande que 700 °C dans le système catalytique.

8. Procédé selon la revendication 7, **caractérisé en ce que** le gaz de vieillissement est introduit avec une température d'environ 1000 °C à environ 1250 °C dans le système catalytique.

9. Procédé selon l'une des revendications 3 à 8, **caractérisé en ce que** le gaz d'échappement chaud est généré par une opération de combustion avec Lambda plus grand que 1.

10. Procédé selon la revendication 9, **caractérisé en ce que** le gaz d'échappement chaud est généré par une opération de combustion avec Lambda plus grand que 1,5.

11. Procédé selon l'une des revendications 2 à 10, si les revendications 5 et 6 sont dépendants de la revendication 2, **caractérisé en ce qu'**en tant que combustible, un fluide combustible contenant C- du groupe de fluides sous forme gazeuse ou liquide est employé.

12. Procédé selon la revendication 11, **caractérisé en ce qu'**en tant que combustible, un combustible à basse teneur en soufre est employé.

13. Procédé selon la revendication 12, **caractérisé en ce qu'**un combustible avec une teneur en soufre plus petite que 10 ppm est employé.

14. Procédé selon la revendication 13, **caractérisé en ce qu'**un combustible avec une teneur en soufre plus petite que 5 ppm est employé.

15. Procédé selon l'une des revendications 2 à 14, si les revendications 5 et 6 sont dépendants de la revendication 2, **caractérisé en ce que** la proportion du combustible et de l'air de combustion est variée dans des cycles prédéterminés.

16. Procédé selon la revendication 15, **caractérisé en ce que** le système catalytique est chargé avec différentes compositions de gaz de vieillissement et différentes températures de gaz de vieillissement correspondant à une charge collective.

17. Procédé selon la revendication 16, **caractérisé en ce que** le système catalytique est sujet à une charge correspondant au fonctionnement mixte de véhicules.

18. Procédé selon l'une des revendications 1 à 17, **caractérisé en ce que** le système catalytique est soumis de manière répétée à chaque fois après une étape de vieillissement à un diagnostic, **en ce que** le rapport d'amplitudes d'une sonde post-catalyse en tant qu'une mesure de la capacité d'accumulation d'oxygène est comparé à un modèle, **en ce que** le modèle est adapté à un important catalyseur limite et une valeur limite est déterminée sur la base du rapport d'amplitudes entre le signal actuel de la sonde post-catalyse en comparaison avec le signal de la sonde post-catalyse modélisé, **en ce que** le signal de la sonde post-catalyse est pris comme une mesure de la capacité d'accumulation d'oxygène du système catalytique.

19. Procédé selon l'une des revendications 1 à 18, **caractérisé en ce que** le gaz de vieillissement amené du système catalytique est refroidi.

20. Procédé selon la revendication 19, **caractérisé en ce que** le gaz de vieillissement amené du système catalytique est refroidi à travers un gaz sortant du système catalytique.

21. Procédé selon la revendication 20, **caractérisé en ce que** du gaz refroidi sortant du système catalytique est ajouté au gaz de vieillissement alimentant le système catalytique.

22. Procédé selon l'une des revendications 1 à 21, **caractérisé en ce que** la température du gaz de vieillissement alimentant le système catalytique est variée par refroidissement indépendamment du réglage de la valeur Lambda par la génération du gaz de vieillissement.

23. Procédé selon l'une des revendications 1 à 22, **caractérisé en ce qu'**au moins un composant est mélangé au gaz de vieillissement chaud pour ajuster la composition du gaz de vieillissement.

24. Procédé selon la revendication 23, **caractérisé en ce qu'**au moins un composant du groupe comprenant des constituants gazeux contenant C- et HC- est mélangé.

25. Procédé selon l'une des revendications 1 à 24, **caractérisé en ce que** le gaz de vieillissement est généré synthétiquement.

26. Procédé selon l'une des revendications 1 à 25, **caractérisé en ce qu'**un système catalytique du groupe comprenant un catalyseur trifonctionnel, un catalyseur NOx-, un catalyseur d'oxydation, un reformeur pour un agent réducteur et un reformeur pour des cellules à combustible est vieilli avec le gaz de vieillissement.

27. Appareil pour le vieillissement artificiel d'un système catalytique (6) servant pour une utilisation à un banc d'essai catalytique pour la transformation de gaz d'échappement avec au moins un constituant du groupe comprenant des constituants contenant C-, HC- et NOx-, pour lequel un dispositif (1) pour la génération d'un gaz de vieillissement chaud et un dispositif (7) pour la manutention du gaz de vieillissement à travers le système catalytique (6) sont prévus, **caractérisé en ce qu'**un dispositif pour le recyclage partiel du gaz sortant du système catalytique est prévu pour le gaz de vieillissement.

28. Appareil selon la revendication 27, **caractérisé en ce que** le dispositif (1) pour la génération d'un gaz de vieillissement chaud est un dispositif pour la combustion d'un combustible contenant C- avec de l'air de combustion.

29. Appareil selon la revendication 27 ou 28, **caractérisé en ce que** le dispositif (7) pour la manutention du gaz de vieillissement chaud à travers le système catalytique est un ventilateur à air chaud.

30. Appareil selon la revendication 28, **caractérisé en ce que** le dispositif (7) pour la manutention du gaz de vieillissement chaud à travers le système catalytique est une pompe à jet.

31. Appareil selon l'une des revendications 27 à 30, **caractérisé en ce qu'**une sonde de température (8) est prévue pour la mesure de la température du gaz de vieillissement alimentant le système catalytique (6).

32. Appareil selon la revendication 31, **caractérisé en ce qu'**un dispositif pour le réglage de la température du gaz de vieillissement alimentant le système catalytique (6) est prévu

33. Appareil selon l'une des revendications 27 à 32, **caractérisé en ce qu'**un dispositif pour le refroidissement du gaz de vieillissement alimentant le système catalytique (6) est prévu.

34. Appareil selon la revendication 33, **caractérisé en ce que** le dispositif pour le refroidissement du gaz de vieillissement alimentant le système catalytique (6) comprend un dispositif (23, 25) pour le refroidissement du gaz recyclé sortant du système catalyseur (6).

35. Appareil selon l'une des revendications 27 à 34, **caractérisé en ce qu'**une sonde à oxygène (12) à la sortie du système catalyseur est prévue pour la surveillance du système catalyseur (6).

36. Appareil selon l'une des revendications 27 à 35, **caractérisé en ce qu'**une sonde à oxygène (11) est prévue pour la surveillance du gaz de vieillissement alimentant le système catalytique (6).
